# EUROPEAN PATENT APPLICATION

(11) **EP 4 675 698 A1**
(43) Date of publication of application: **07.01.2026**
(21) Application number: 23927042.4
(22) Date of filing: 30.08.2023
(51) Int. Cl.: H01M 4/134, H01M 4/62, H01M 4/38, H01M 4/1395, H01M 10/052

(54) **NEGATIVE ELECTRODE AND PREPARATION METHOD THEREFOR, SOLID-STATE BATTERY AND ELECTRIC DEVICE**

(30) Priority: 15.03.2023 CN 202310313070
(71) Applicant: Sunwoda Mobility Energy Technology Co., Ltd., Shenzhen, Guangdong 518107 (CN)
(72) Inventor: LIANG, Shishuo, Shenzhen, Guangdong 518107 (CN); KANG, Shusen, Shenzhen, Guangdong 518107 (CN); LI, Zhen, Shenzhen, Guangdong 518107 (CN); SONG, Feifei, Shenzhen, Guangdong 518107 (CN); FENG, Jing, Shenzhen, Guangdong 518107 (CN)
(74) Representative: Moniz Pereira, Manuel
(86) International application number: PCT/CN2023/115925
(87) International publication number: WO 2024/187696

(57) **Abstract**

The present invention relates to the technical field of lithium battery materials, and in particular relates to a negative electrode and a preparation method therefore, a solid-state battery and an electric device. The negative electrode comprises a metal lithium layer and a modification layer positioned on at least one surface of the metal lithium layer, wherein the modification layer comprises organic matter and a non-metal lithium compound, the organic matter comprises halogen and an ether group, and the arithmetic average roughness of the modification layer is 0.05 - 1.6 nm. In the negative electrode, the metal lithium layer is modified with the specific organic matter and the non-metal lithium compound, such that direct contact between a solid electrolyte and metal lithium can be reduced, the interface impedance is reduced, and the deposition of lithium ions is facilitated; therefore, the utilization rate of the battery is increased, and the cycle life of the battery is prolonged.

## Description

### CROSS-REFERENCE TO RELATED APPLICATION

The present invention claims the priority to the Chinese patent application with the filing No. 202310313070.1 filed with the Chinese Patent Office on March 15, 2023, and entitled "NEGATIVE ELECTRODE AND PREPARATION METHOD THEREFOR, SOLID-STATE BATTERY AND ELECTRIC DEVICE", the contents of which are incorporated herein by reference in entirety.

### TECHNICAL FIELD

The present invention relates to the technical field of lithium battery materials, and in particular relates to a negative electrode and a preparation method therefore, a solid-state battery and an electric device.

### BACKGROUND ART

Heretofore, lithium metal negative electrode has been regarded as the preferred negative electrode for increasing the energy density of lithium batteries, in that the lithium negative electrode has an extremely low electrochemical potential (-3.04V vs. SHE), a relatively low density (0.53g·cm⁻¹) and an extremely high theoretical capacity (3860mAh·g⁻¹). However, lithium metal is highly reactive and prone to react with other substances, and meanwhile, lithium dendrites are easily formed on the surface thereof; during the battery cycling process, the lithium dendrites tend to pierce the electrolyte, thereby leading to internal short circuit and serious safety issues.

Using high-strength solid-state electrolytes for preparing all-solid-state batteries is expected to realize the application of lithium metal negative electrode and enhance the energy density of the battery. However, the majority of solid-state electrolytes are unstable with respect to lithium metal, and a high-impedance interface layer will be formed during the battery cycling process. Besides, the contact between the solid-state electrolyte and metallic lithium is poor, and the current distribution is non-uniform, which promotes the growth of lithium dendrites; the dendrites pass through the gaps of the solid-state electrolyte to reach the positive electrode, resulting in short circuit of the battery.

### SUMMARY

A negative electrode is provided in the present invention, which at least solves technical problems in the related art such as poor interfacial chemical stability and high interfacial impedance between the solid-state electrolyte and the lithium metal negative electrode.

The following technical solutions are proposed in the present invention.

In some embodiments, a negative electrode is provided in the present invention, which can include a metallic lithium layer and a modification layer on at least one surface of the metallic lithium layer, wherein the modification layer can include organic substances and non-metallic lithium compounds, the organic substances can contain halogens and ether groups, and the arithmetic average roughness of the modification layer can be 0.05 nm - 1.6 nm.

Optionally, based on the mass of the modification layer, the content of the organic substances can be 0,1% - 5%.

Optionally, the porosity of the modification layer can be 2% - 10%.

Optionally, the thickness of the modification layer can be 0,05 µm - 2 µm.

Optionally, in the modification layer, the morphology of the non-metallic lithium compounds can include any one or more of a sheet shape, a granular shape and a linear shape.

Optionally, the particle size of the non-metallic lithium compounds can be 5 nm - 500 nm.

Optionally, the non-metallic lithium compounds can include any one or more of LiF, LiCl and LiBr.

Optionally, the organic substances can include at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether.

In other embodiments, a preparation method of a negative electrode is further provided in the present invention, which can include the following step:
contacting a metallic lithium sheet with a gaseous halogen-containing ether compound to obtain the negative electrode.
Optionally, the gaseous halogen-containing ether compound can include at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether.

Optionally, the preparation method can include the following steps:
subjecting the halogen-containing ether compound to heating conditions, so as to obtain the gaseous halogen-containing ether compound;
placing the metallic lithium sheet in a system of the gaseous halogen-containing ether compound, and bringing the metallic lithium sheet into contact with the gaseous halogen-containing ether compound, so as to obtain the negative electrode after the reaction.

In another embodiment, a solid-state battery is further provided in the present invention, which can include a solid-state electrolyte and any one of the negative electrodes described above, wherein the interfacial impedance between the solid-state electrolyte and the negative electrode is 50 Ω - 160 Ω.

Optionally, the solid-state electrolyte includes any one of an inorganic solid-state electrolyte and a polymer solid-state electrolyte.

Optionally, the solid-state battery can include a sulfide solid-state lithium battery.

In another embodiment, an electric device is further provided in the present invention, which can include any one of the solid-state batteries described above, and the solid-state battery can serve as a power supply for the electric device.

Compared with the related art, the beneficial effects of the present invention can be at least as follows:
(1) the negative electrode of the present invention has specific organic substances and non-metallic lithium compounds modified on the metallic lithium layer, which can reduce the direct contact between the solid-state electrolyte and metallic lithium, reduce the interfacial impedance, and facilitate the deposition of lithium ions, thereby improving the utilization rate and cycle life of the battery;
(2) the preparation method of the negative electrode in the present invention features simple operation, mild conditions, and ease of large-scale preparation; and
(3) the negative electrode of the present invention has good chemical stability at the interface with the solid-state electrolyte and low interfacial impedance, and can be used in solid-state batteries and as a power supply in electric device, with good battery utilization rate and cycle life, etc.

### BRIEF DESCRIPTION OF THE DRAWINGS

To provide a clearer explanation of the technical solutions in the specific embodiments of the present invention or the related art, the following will briefly introduce the drawings required for describing the specific embodiments or related technologies. It is evident that the drawings described below represent some embodiments of the present invention. For those skilled in the art, other drawings can be obtained according to these drawings without inventive efforts.
FIG. 1 shows the distribution of F (fluorine) elements on the surface of the modification layer of the negative electrode prepared in Example 1 of the present invention;
FIG. 2 shows the distribution of F elements on the surface of the modification layer of the negative electrode prepared in Comparative Example 3; and
FIG. 3 shows the cycle performance test chart of the battery prepared in Example 1 of the present invention.

### DETAILED DESCRIPTION OF EMBODIMENTS

The technical solutions of the present invention will be clearly and completely described below with reference to the drawings and specific embodiments, but those skilled in the art will understand that the examples described below are part of the examples of the present invention, rather than all of the examples, and are merely used to illustrate the present invention and should not be regarded as limiting the scope of the present invention. Based on the examples in the present invention, all other examples obtained by those skilled in the art without inventive work belong to the protection scope of the present invention. Where specific conditions are not specified in the examples, it shall be carried out according to the conventional conditions or the conditions suggested by the manufacturer. The reagents or instruments used without indicating the manufacturer are conventional products that can be obtained through commercially available purchase.

A negative electrode is provided in the present invention, including a metallic lithium layer and a modification layer on at least one surface of the metallic lithium layer, wherein the modification layer includes organic substances and non-metallic lithium compounds, the organic substances contain halogens and ether groups, and the arithmetic average roughness of the modification layer can be 0,05 nm - 1,6 nm.

In the negative electrode of the present invention, organic substances with specific groups and non-metallic lithium compounds are modified on the metallic lithium layer, which can reduce the direct contact between the solid-state electrolyte and metallic lithium, reduce the interfacial impedance, thereby further improving the deposition/stripping behavior of lithium, and enabling the battery to obtain better safety performance and cycle performance. Specifically, the non-metallic lithium compounds have excellent lithium ion transport performance, reduce the internal resistance of the electrode sheet, and can further guide the insertion and extraction of lithium ions, so that the electric field distribution is uniform, avoiding the growth of lithium dendrites. In addition, the ether groups contained in the organic substances in the modification layer are beneficial to the wettability of the electrode sheet to the electrolyte. Halogens can passivate lithium metal, so as to effectively inhibit the side reactions between the electrode and the electrolyte. In addition, the arithmetic average roughness of the modification layer is 0.05 nm - 1.6 nm, which can indicate that the modification layer is closely and uniformly combined with the metallic lithium layer. Accordingly, the contact between the metallic lithium negative electrode and the solid-state electrolyte can be further effectively blocked, and at the same time, the probability of tip discharge of lithium ions during the insertion and extraction process is reduced, the growth of lithium dendrites is reduced, so that the cycle stability of the battery is improved.

In some examples, the organic substances can include at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether.

In some specific embodiments of the present invention, based on the mass of the modification layer, the content of the organic substances can be 0,1% - 5%.

For example, in different embodiments, based on the mass of the modification layer, the content of the organic substances can exemplarily be one of 0,1%, 0,5%, 1%, 1,5%, 2%, 2,5%, 3%, 3,5%, 4%, 4,5%, 5% or a range value between any two thereof. When the content of the organic substances in the modification layer meets the above requirements, it can not only ensure that the electrode sheet has relatively excellent wettability but also ensure the uniform deposition of lithium ions and avoid the growth of lithium dendrites.

In some specific embodiments of the present invention, the porosity of the modification layer can be 2% - 10%.

For example, in different embodiments, the porosity of the modification layer can exemplarily be one of 2%, 3%, 4%, 5%, 6%, 7%, 8%, 9%, 10% or a range value between any two thereof. Within the above pore range, it is beneficial to improve the wettability of the electrode sheet and reduce the internal resistance of the battery.

The modification layer of the present invention has a relatively high density, which can effectively block the contact between the metallic lithium negative electrode and the solid-state electrolyte.

In some specific embodiments of the present invention, the thickness of the modification layer can be 0,05 µm - 2 µm.

For example, in different embodiments, the thickness of the modification layer can exemplarily be one of 0,05 µm, 0,1 µm, 0,2 µm, 0,5 µm, 0,8 µm, 1 µm, 1,2 µm, 1,5 µm, 1,8 µm, 2 µm or a range value between any two thereof. The modification layer with an appropriate thickness can give full play to the role of improving lithium deposition, so as to effectively enhance the safety performance of the battery; at the same time, it can further enable the battery to have lower impedance, improve the cycle performance of the battery, and help the battery obtain higher energy density. When the thickness of the modification layer of the present invention is within the above range, it not only ensures its blocking effect between the metallic lithium negative electrode and the solid-state electrolyte and guarantees safety performance, but also ensures the utilization rate of the battery, improves cycle performance and increases the energy density of the battery.

In some specific embodiments of the present invention, in the modification layer, the morphology of the non-metallic lithium compounds can include any one or more of a sheet shape, a granular shape and a linear shape. The non-metallic lithium compounds with the above morphologies are beneficial to their uniform distribution, and at the same time reduce the transport path of lithium ions, so as to increase the transport rate of lithium ions.

To further improve the uniform dispersion of non-metallic lithium compounds and increase the transport rate of lithium ions, in some specific embodiments of the present invention, the particle size of the non-metallic lithium compounds can be 5 nm - 500 nm.

For example, in different embodiments, the size of the non-metallic lithium compounds can exemplary be one of 5 nm, 10 nm, 50 nm, 100 nm, 150 nm, 200 nm, 250 nm, 300 nm, 350 nm, 400 nm, 450 nm, 500 nm or a range value between any two thereof.

In some specific embodiments of the present invention, the non-metallic lithium compounds can include any one or more of LiF, LiCl and LiBr.

The non-metallic lithium compounds in the modification layer, especially fluorine elements, can passivate lithium metal, effectively inhibit the side reactions between the electrode and the electrolyte, and thus improve the cycle stability of the metallic lithium negative electrode. Moreover, the halogenated interface formed by the non-metallic lithium compounds has high interfacial energy and low lithium-ion interfacial diffusion energy barrier, which ensures more uniform deposition of lithium metal, so as to effectively inhibit the nucleation and growth of lithium dendrites. In addition, the halogenated interface further has good mechanical stability, which can effectively prevent the destruction of the interface during the lithium deposition process and provide support for the long-term stable cycle of the lithium metal negative electrode.

A preparation method of a negative electrode is further provided in the present invention, which can include the following step:
a metallic lithium sheet is contacted with a gaseous halogen-containing ether compound, so as to obtain the negative electrode.

In the present example, the halogen-containing ether compound can include at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether. After the halogen-containing ether compound reacts with lithium metal, a modification layer containing non-metallic lithium compounds, halogen and ether groups is formed on the surface of lithium metal.

In some specific embodiments of the present invention, the contact duration can be 0,5 h - 24 h.

For example, in different embodiments, the contact duration can exemplary be one of 0.5h, 1h, 2h, 4h, 8h, 12h, 16h, 20h, 24h or a range value between any two thereof.

In some specific embodiments of the present invention, the preparation method can include the following steps:
a gaseous halogen-containing ether compound is obtained from the halogen-containing ether compound under heating conditions; and
the metallic lithium sheet is placed in a system of the gaseous halogen-containing ether compound, and the metallic lithium sheet is contacted with the gaseous halogen-containing ether compound, so as to obtain the negative electrode after the reaction.

Herein, the ether compound can be vaporized by means of heating, and the heating temperature can be adjusted according to the actual vaporization temperature of the halogen-containing ether compound, as long as the gaseous halogen-containing ether compound is obtained. For example, the heating temperature can be 80 °C - 178 °C, etc.

Under heating conditions, the vaporized ether compound reacts with the lithium metal substrate, which can improve the bonding force between the modification layer and the substrate, ensure that the modification layer is in closer contact with the lithium metal substrate, and prevent the structure from being easily damaged.

A solid-state battery is further provided in the present invention, which can include a solid-state electrolyte and the negative electrodes described in any one of the above embodiments, wherein the interfacial impedance between the solid-state electrolyte and the negative electrode is 50 Ω - 160 Ω.

Through using the negative electrode of the present invention, the solid-state battery of the present invention can achieve relatively high safety performance and cycle performance.

In some specific embodiments of the present invention, the solid-state battery can further include: a solid-state electrolyte, wherein the solid-state electrolyte includes any one of an inorganic solid-state electrolyte and a polymer solid-state electrolyte.

In some specific embodiments of the present invention, the solid-state battery can include a sulfide solid-state lithium battery.

An electric device is further provided in the present invention, which can include the solid-state batteries described in any one of the above embodiments, and the solid-state battery serves as a power supply for the electric device.

The electric device of the present invention can include the above-mentioned solid-state battery, and thus has at least the same advantages as the solid-state battery.

### Example 1

A negative electrode and a preparation method therefor were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 2

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 5% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 3

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 10% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 4

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 25% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 5

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 40% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 6

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 55% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 7

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 65% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 8

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 70% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 9

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 80% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 140 °C for 10 h, then cooled to room temperature, and the metallic lithium sheet was taken out, so as to obtain a surface-modified lithium metal negative electrode.

### Example 10

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 70 °C for 10 h, then cooled to room temperature, and the metallic lithium sheet was taken out, so as to obtain a surface-modified lithium metal negative electrode.

### Example 11

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 80 °C for 10 h, then cooled to room temperature, and the metallic lithium sheet was taken out, so as to obtain a surface-modified lithium metal negative electrode.

### Example 12

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 120 °C for 10 h, then cooled to room temperature, and the metallic lithium sheet was taken out, so as to obtain a surface-modified lithium metal negative electrode.

### Example 13

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 180 °C for 10 h, then cooled to room temperature, and the metallic lithium sheet was taken out, so as to obtain a surface-modified lithium metal negative electrode.

### Example 14

A negative electrode and a preparation method therefore were provided in the present example, wherein the preparation method of the negative electrode can include the following steps:
(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was placed above the 1,1,2,2-tetrafluoroethyl ethyl ether, and the metallic lithium sheet was not in contact with the ether liquid; then the temperature-resistant container was sealed; and
(3) the sealed temperature-resistant container in step (2) was placed in an oven and heated at 190 °C for 10 h, then cooled to room temperature, and the metallic lithium sheet was taken out, so as to obtain a surface-modified lithium metal negative electrode.

### Example 15

A negative electrode and a preparation method therefore were provided in the present example, wherein the preparation method of the negative electrode can include the following steps:
(1) a metallic lithium sheet was subjected to polishing treatment;
(1) (2) 2-bromoethyl methyl ether with a concentration of 50% was added into a sealable temperature-resistant container with a volume of 50 mL, the metallic lithium sheet treated in step (1) was placed above the 2-bromoethyl methyl ether, and the metallic lithium sheet was not in contact with the ether liquid; then the temperature-resistant container was sealed; and
(2) the sealed temperature-resistant container in step (2) was placed in an oven and heated at 170 °C for 10 h, then cooled to room temperature, and the metallic lithium sheet was taken out, so as to obtain a surface-modified lithium metal negative electrode.

### Example 16

A negative electrode and a preparation method therefore were provided in the present example, wherein the preparation method of the negative electrode can include the following steps:
(1) a metallic lithium sheet was subjected to polishing treatment;
(2) chloromethyl methyl ether with a concentration of 50% was added into a sealable temperature-resistant container with a volume of 50 mL, the metallic lithium sheet treated in step (1) was placed above the chloromethyl methyl ether, and the metallic lithium sheet was not in contact with the ether liquid; then the temperature-resistant container was sealed; and
(3) the sealed temperature-resistant container in step (2) was placed in an oven and heated at 170 °C for 10 h, then cooled to room temperature, and the metallic lithium sheet was taken out, so as to obtain a surface-modified lithium metal negative electrode.

### Comparative Example 1

The preparation method was the same as that in Example 1, except that 1,1,2,2-tetrafluoroethyl ethyl ether in step (1) was replaced with tetrafluoromethane.

### Comparative Example 2

The preparation method was the same as that in Example 1, except that it only included the step of polishing the metallic lithium sheet.

### Comparative Example 3

(1) a metallic lithium sheet was subjected to polishing treatment;
(2) 1,1,2,2-tetrafluoroethyl ethyl ether with a concentration of 50% was added into a sealable temperature-resistant container with a volume of 50 mL, the metallic lithium sheet treated in step (1) was immersed in the above - prepared solution, and left to stand for 10 hours; and
(3) the metallic lithium sheet was taken out and dried, so as to obtain the surface-modified lithium metal negative electrode.

The prepared negative electrode has the parameter characteristics shown in Table 1. The negative electrodes of Examples 1-16 and Comparative Examples 1-3 are assembled into solid-state batteries, and the cycle performance test and internal resistance test can be performed on the solid-state batteries. Herein, the positive electrode of the solid-state battery is lithium cobalt oxide, and the solid-state electrolyte is Li₁₀GeP₂S₁₂.

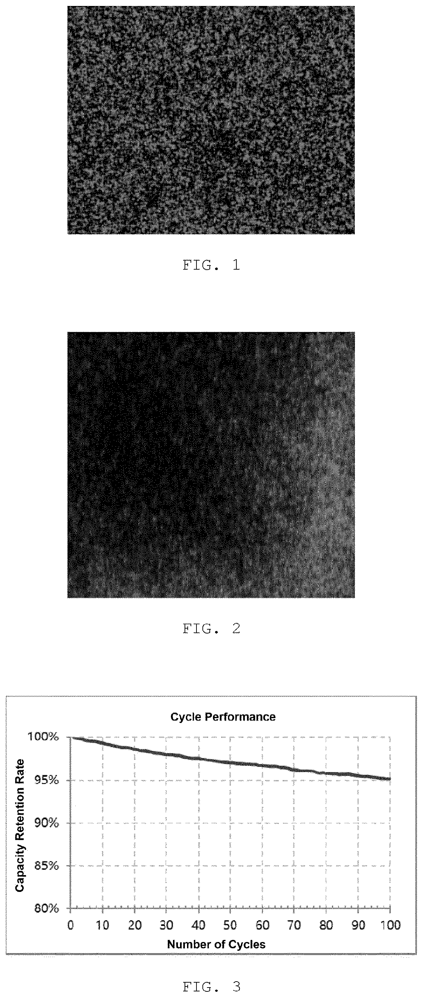

The test method for cycle performance and rate performance is as follows: at room temperature, the battery is left standing for 5 minutes, charged at a constant current of 0.1C to 4.2V, then charged at a constant voltage until the current is less than or equal to 0.05C, then left standing for 5 minutes, and then discharged at a constant current of 0.1C to 3.0V. The above is one charge-discharge cycle, and the discharge capacity for the present cycle is recorded as the charge-discharge capacity of the lithium-ion secondary battery in the first cycle. The battery is cyclically charged 100 times according to the above method, and the charge-discharge capacity of each cycle is recorded. The battery capacity retention rate (%) = discharge capacity of the 100th cycle / discharge capacity of the 1st cycle × 100%. FIG. 3 shows the cycle performance test chart of the battery in Example 1.

The internal resistance test method is that a battery internal resistance tester can be adopted to obtain the battery internal resistance.

Roughness is obtained by AFM (atomic force microscope) test.

**Table 1**

| No. | Groups contained in organic substance | Non-metallic lithium compound | Contents of organic substance (%) | Porosity of modification layer (%) | Thickness of modification layer (µm) |
|---|---|---|---|---|---|
| Example 1 | Halogen, ether group | LiF | 2,5 | 6 | 1 |
| Example 2 | Halogen, ether group | LiF | 2,5 | 2 | 0, 05 |
| Example 3 | Halogen, ether group | LiF | 2,5 | 2,5 | 0,1 |
| Example 4 | Halogen, ether group | LiF | 2,5 | 3,5 | 0,5 |
| Example 5 | Halogen, ether group | LiF | 2,5 | 4,5 | 0, 8 |
| Example 6 | Halogen, ether group | LiF | 2,5 | 5 | 1,2 |
| Example 7 | Halogen, ether group | LiF | 2,5 | 6, 5 | 1,5 |
| Example 8 | Halogen, ether group | LiF | 2,5 | 8, 8 | 1, 8 |
| Example 9 | Halogen, ether group | LiF | 2,5 | 10 | 2 |
| Example 10 | Halogen, ether group | LiF | 0,1 | 6 | 1 |
| Example 11 | Halogen, ether group | LiF | 0, 8 | 6 | 1 |
| Example 12 | Halogen, ether group | LiF | 2 | 6 | 1 |
| Example 13 | Halogen, ether group | LiF | 3 | 6 | 1 |
| Example 14 | Halogen, ether group | LiF | 5 | 6 | 1 |
| Example 15 | Halogen, ether group | LiBr | 2,5 | 6 | 1 |
| Example 16 | Halogen, ether group | LiCl | 2,5 | 6 | 1 |
| Comparative Example 1 | Halogen | LiF | 2,5 | 6 | 1 |
| Comparat ive Example 2 | / | / | / | / | / |
| Comparat ive Example 3 | Halogen, ether group | LiF | 2,5 | 12 | 5 |

| No. | Particle size of non-metallic lithium compound (nm) | | 100-cycle battery capacity retention rate (%) | Battery internal resistanc e (mΩ) | Surface roughness Ra of modification layer (nm) |
|---|---|---|---|---|---|
| Example 1 | 250 | | 95,1 | 12,5 | 0,05 |
| Example 2 | 250 | | 92,5 | 10,5 | 1,6 |
| Example 3 | 250 | | 93,1 | 10, 8 | 0,4 |
| Example 4 | 250 | | 93,5 | 11 | 0,4 |
| Example 5 | 250 | | 94,1 | 11, 8 | 0,2 |
| Example 6 | 250 | | 94,8 | 12, 6 | 0,1 |
| Example 7 | 250 | | 94,2 | 13,5 | 0,1 |
| Example 8 | 250 | | 93,1 | 13, 8 | 0,4 |
| Example 9 | 250 | | 92,1 | 14,2 | 1,2 |
| Example 10 | 5 | | 91,5 | 11,5 | 0, 8 |
| Example 11 | 50 | | 92, 6 | 12,0 | 0,4 |
| Example 12 | 150 | | 93,4 | 12,1 | 0,4 |
| Example 13 | 350 | | 93,5 | 13, 6 | 1,6 |
| Example 14 | 500 | | 91,7 | 13, 7 | 0,8 |
| Example 15 | 250 | | 93,5 | 12, 9 | 0,4 |
| Example 16 | 250 | | 92,8 | 13,22 | 1,3 |
| Comparative Example 1 | 250 | | 83,5 | 22,4 | 1,2 |
| Comparative Example 2 | / | | 75,2 | 8, 1 | 0, 6 |
| Comparative Example 3 | 350 | | 85,1 | 18, 5 | 36,5 |

It can be known from the above test results that when the negative electrode of the present invention is used in a battery, it can significantly improve the cycle performance of the battery, and at the same time reduce the internal resistance of the battery, thereby improving the rate performance of the battery. In addition, it can be seen from the data of Examples 1-16 and Comparative Example 3 that the modification layer obtained by the vapor method is denser than the modification layer obtained by the traditional immersion method, and its surface roughness is lower, which can effectively reduce the tip discharge generated during the insertion and extraction process of lithium ions at the negative electrode interface, thereby reducing the growth of lithium dendrites and improving the cycle performance of the battery.

In addition, FIG. 1 and FIG. 2 respectively show the distribution diagrams of F element in the modification layers of Example 1 and Comparative Example 3 obtained based on EDS mapping test. It can be seen from FIG. 1 and FIG. 2 that the distribution of F element in the modification layer of Example 1 is more uniform, which can reflect that the modification layer of the fluorine - containing compound obtained in the Example is denser and the distribution of fluoride is more uniform. Based on this, the contact between the metallic lithium negative electrode and the solid-state electrolyte can be effectively blocked, and the insertion and extraction process of lithium ions can be made more uniform.

Finally, it should be noted that the above examples are only used to illustrate the technical solutions of the present invention, but not to limit them; although the present invention has been described in detail with reference to the foregoing examples, those of ordinary skill in the art should understand that they can still modify the technical solutions recorded in the foregoing examples, or equivalently replace some or all of the technical features therein; and these modifications or replacements do not make the essence of the corresponding technical solutions deviate from the scope of the technical solutions of the examples of the present invention.

### INDUSTRIAL PRACTICABILITY

The present invention relates to the technical field of lithium battery materials, and in particular relates to a negative electrode and a preparation method therefore, a solid-state battery and an electric device. A negative electrode, including a metallic lithium layer and a modification layer on at least one surface of the metallic lithium layer, wherein the modification layer includes organic substances and non-metallic lithium compounds, the organic substances contain halogens and ether groups, and the arithmetic average roughness of the modification layer is 0,05 nm - 1,6 nm. The negative electrode of the present invention has specific organic substances and non-metallic lithium compounds modified on the metallic lithium layer, which can reduce the direct contact between the solid-state electrolyte and metallic lithium, reduce the interfacial impedance, and facilitate the deposition of lithium ions, thereby improving the utilization rate and cycle life of the battery.

In addition, it can be understood that the negative electrode, the preparation method therefore, the solid-state battery and the electric device of the present invention can be reproduced and can be used in various industrial applications. For example, the negative electrode, the preparation method therefore, the solid-state battery and the electric device of the present invention can be used in the technical field of lithium battery materials.

## Claims

1. A negative electrode, **characterized by** comprising a metallic lithium layer and a modification layer on at least one surface of the metallic lithium layer, wherein the modification layer comprises an organic substance and a non-metallic lithium compound, the organic substance contains a halogen and an ether group, and an arithmetic average roughness of the modification layer is 0,05 nm - 1,6 nm.

2. The negative electrode according to claim 1, wherein based on a mass of the modification layer, a content of the organic substance is 0,1% - 5%.

3. The negative electrode according to claim 2, wherein a porosity of the modification layer is 2% - 10%.

4. The negative electrode according to claim 1, wherein a thickness of the modification layer is 0,05 µm - 2 µm.

5. The negative electrode according to claim 1, wherein in the modification layer, a morphology of the non-metallic lithium compound comprises any one or more of a sheet shape, a granular shape and a linear shape.

6. The negative electrode according to claim 1, wherein a particle size of the non-metallic lithium compound is 5 nm - 500 nm.

7. The negative electrode according to any one of claims 1-6, wherein the non-metallic lithium compound comprises any one or more of LiF, LiCl and LiBr.

8. The negative electrode according to any one of claims 1-6, wherein the organic substance comprises at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether.

9. A preparation method for preparing the negative electrode according to any one of claims 1-6, **characterized in that** the preparation method comprises a following step:
contacting a metallic lithium sheet with a gaseous halogen-containing ether compound to obtain the negative electrode.

10. The preparation method according to claim 9, wherein the gaseous halogen-containing ether compound comprises at least one of 1,1,2,2-tetrafluoroethyl ethyl ether, 1,1,2,2-tetrafluoroethyl-2,2,2-trifluoroethyl ether, chloromethyl methyl ether, chloromethyl ethyl ether and 2-bromoethyl methyl ether.

11. The preparation method according to claim 9 or 10, wherein the preparation method comprise following steps: subjecting a halogen-containing ether compound to a heating condition, so as to obtain the gaseous halogen-containing ether compound; placing the metallic lithium sheet in a system of the gaseous halogen-containing ether compound, and bringing the metallic lithium sheet into contact with the gaseous halogen-containing ether compound, so as to obtain the negative electrode after a reaction.

12. A solid-state battery, **characterized by** comprising a solid-state electrolyte and the negative electrode according to any one of claims 1-8, wherein an interfacial impedance between the solid-state electrolyte and the negative electrode is 50 Ω - 160 Ω.

13. The solid-state battery according to claim 12, wherein the solid-state electrolyte comprises any one of an inorganic solid-state electrolyte and a polymer solid-state electrolyte.

14. The solid-state battery according to claim 12 or 13, wherein the solid-state battery comprises a sulfide solid-state lithium battery.

15. An electric device, **characterized by** comprising the solid-state battery according to any one of claims 12 - 14, wherein the solid-state battery serves as a power supply for the electric device.
